# EUROPEAN PATENT APPLICATION

(11) **EP 1 503 583 A1**
(43) Date of publication of application: **02.02.2005**
(21) Application number: 04017869.1
(22) Date of filing: 28.07.2004
(51) Int. Cl.: H04N 5/445

(54) **Mobile terminal device and video/speech output control method in mobile terminal device and program thereof**

(30) Priority: 30.07.2003 JP 2003282229
(71) Applicant: NEC CORPORATION, Tokyo (JP)
(72) Inventor: Saeki, Yukihiro, Kakegawa-shi Shizouka (JP)
(74) Representative: VOSSIUS & PARTNER

(57) **Abstract**

A controller (13) monitors an AFT voltage from an AFT unit, reads, from a memory, a threshold value for determining on an AFT voltage output from an AFT unit according to reception conditions, and compares the AFT voltage and the threshold value to determine whether good reception exists or not. When the reception is good, the controller (13) controls a display output unit (15) and a voice output unit (16) to output a video signal and a voice signal and when the reception is not good, controls the display output unit (15) and the voice output unit (16) to suppress output of the video signal and the voice signal.

## Description

The present invention relates to a mobile terminal device and a display/speech control method in the mobile terminal device and, more particularly, a mobile terminal device such as a headphone stereo apparatus or a mobile phone terminal having a built-in radio or television tuner.

In recent years, as mobile apparatuses such as a headphone stereo apparatus and a mobile phone terminal, products having a built-in tuner of an FM (Frequency Modulation) radio or a TV (television) have been marketed.

As a headphone stereo apparatus with a liquid crystal television, proposed is an apparatus having a TV tuner provided therein to control on/off of an output mode of an TV image as a main frame opens or closes (see e.g. Japanese Utility Model Laying-Open (Kokai) No. Heisei 01-057870).

Because a tuner of an FM radio or a TV is contained, the above-described conventional mobile apparatus has its current consumption increased to shorten a continuous working time. Increase in current consumption is inevitable with the scale-up of a display unit such as an LCD (Liquid Crystal Display).

An object of the present invention is to provide a mobile terminal device which eliminates the above-described shortcomings and reduces current consumption to increase a continuous working time, and a display/voice control method in the mobile terminal device and a program thereof.

According to the first aspect of the invention, a mobile terminal device mounted at least with a television tuner to display a video signal through a display output unit and output a voice signal through a voice output unit, comprising:
a determination unit which determines on reception conditions at the time of selecting a television channel, and a controller which controls at least one of the display output unit and the voice output unit according to a result of the determination by the determination unit.

In the preferred construction, the controller, when determination that reception is good is made by the determination unit, outputs the video signal and the voice signal through the display output unit and the voice output unit and when the determination that reception is good is not made by the determination unit, suppresses output of the video signal and the voice signal from the display output unit and the voice output unit.

In another preferred construction, the determination unit determines on the reception conditions by monitoring at least one of an AFT (Automatic Fine Tuning) voltage obtained by converting a frequency deviation which is caused by a reception condition at the time of the television channel selection and a reception level signal.

In another preferred construction, the controller, when determination that reception is good is made by the determination unit, makes the display output unit and the voice output unit output the video signal and the voice signal and when the determination that reception is good is not made by the determination unit, suppresses output of the video signal and the voice signal from the display output unit and the voice output unit, and the determination unit determines on the reception conditions by monitoring at least one of an AFT (Automatic Fine Tuning) voltage obtained by converting a frequency deviation which is caused by a reception condition at the time of the television channel selection and a reception level signal.

In another preferred construction, the controller controls the voice output unit according to a result of the determination on a reception condition by the determination unit and external user setting.

In another preferred construction, the controller controls the voice output unit according to a result of the determination on a reception condition by the determination unit and external user setting, and when determination is made by the determination unit that reception is good, makes the display output unit and the voice output unit output the video signal and the voice signal and when the determination is not made by the determination unit that reception is good, suppresses output of the video signal and the voice signal from the display output unit and the voice output unit.

In another preferred construction, the controller controls the voice output unit according to a result of the determination on a reception condition by the determination unit and external user setting, and when determination is made by the determination unit that reception is good, makes the display output unit and the voice output unit output the video signal and the voice signal and when the determination is not made by the determination unit that reception is good, suppresses output of the video signal and the voice signal from the display output unit and the voice output unit, and the determination unit determines on the reception conditions by monitoring at least one of an AFT (Automatic Fine Tuning) voltage obtained by converting a frequency deviation which is caused by a reception condition at the time of the television channel selection and a reception level signal.

In another preferred construction, the controller controls the display output unit and the voice output unit according to a result of the determination on a reception condition by the determination unit and external user setting.

In another preferred construction, the controller controls the display output unit and the voice output unit according to a result of the determination on a reception condition by the determination unit and external user setting, and when determination is made by the determination unit that reception is good, makes the display output unit and the voice output unit output the video signal and the voice signal and when the determination is not made by the determination unit that reception is good, suppresses output of the video signal and the voice signal from the display output unit and the voice output unit.

In another preferred construction, the controller controls the display output unit and the voice output unit according to a result of the determination on a reception condition by the determination unit and external user setting, and when determination is made by the determination unit that reception is good, makes the display output unit and the voice output unit output the video signal and the voice signal and when the determination is not made by the determination unit that reception is good, suppresses output of the video signal and the voice signal from the display output unit and the voice output unit, and the determination unit determines on the reception conditions by monitoring at least one of an AFT (Automatic Fine Tuning) voltage obtained by converting a frequency deviation which is caused by a reception condition at the time of the television channel selection and a reception level signal.

According to another aspect of the invention, a display/voice control method of a mobile terminal device mounted at least with a television tuner to display a video signal through a display output unit and output a voice signal through a voice output unit, comprising the steps of on the mobile terminal device side, determining on reception conditions at the time of television channel selection, and controlling at least one of the display output unit and the voice output unit according to a result of the determination.

According to another aspect of the invention, a program of a display/voice control method executed on a computer as a mobile terminal device mounted at least with a television tuner to display a video signal through a display output unit and output a voice signal through a voice output unit, comprising the functions of determining on reception conditions at the time of television channel selection, and controlling at least one of the display output unit and the voice output unit according to a result of the determination.

More specifically, the display/voice control method of the present invention enables reduction in current consumption by conducting output according to reception conditions at the time of TV (television) channel selection, that is, by outputting a video signal and a voice signal when the reception condition is good and suppressing output of a video signal and a voice signal when the reception condition is not good.

In addition, in the display/voice control method of the present invention, with reception conditions at the time of TV channel selection being classified into three stages, reception good, reception possible and reception impossible, a voice output mode is arbitrarily controlled at each stage of reception conditions to enable reduction in current consumption.

Moreover, in the display/voice control method of the present invention, with reception conditions at the time of TV channel selection being classified into three stages, reception good, reception possible and reception impossible, a display/voice output mode is arbitrarily controlled at each stage of reception conditions to enable reduction in current consumption.

These enable the display/voice control method of the present invention to reduce current consumption as much as possible at the time of TV module activation, thereby increasing a continuous working time of a mobile apparatus.

In addition, in the display/voice control method of the present invention, a result of determination on a reception state by an AFT (Automatic Fine Tuning) provided in a TV module and display of a video signal and output of a voice signal are controlled linking with each other. An AFT voltage, which is used for determining whether reception is good at the time of selecting a TV channel, controls the result of the determination on reception conditions and output of the video signal and the voice signal so as to link with each other to reduce current consumption, thereby increasing a continuous working time of the mobile apparatus.

Other objects, features and advantages of the present invention will become clear from the detailed description given herebelow.

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing an internal structure of a mobile terminal device according to an embodiment of the present invention;
Fig. 2 is a flow chart showing display/voice control processing in a mobile terminal device according to a first embodiment of the present invention;
Fig. 3 is a flow chart showing display/voice control processing in a mobile terminal device according to a second embodiment of the present invention;
Fig. 4 is a flow chart showing display/voice control processing in the mobile terminal device according to the second embodiment of the present invention;
Fig. 5 is a flow chart showing display/voice. control processing in a mobile terminal device according to a third embodiment of the present invention;
Fig. 6 is a flow chart showing display/voice control processing in the mobile terminal device according to the third embodiment of the present invention; and
Fig. 7 is a flow chart showing display/voice control processing in the mobile terminal device according to the third embodiment of the present invention.

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

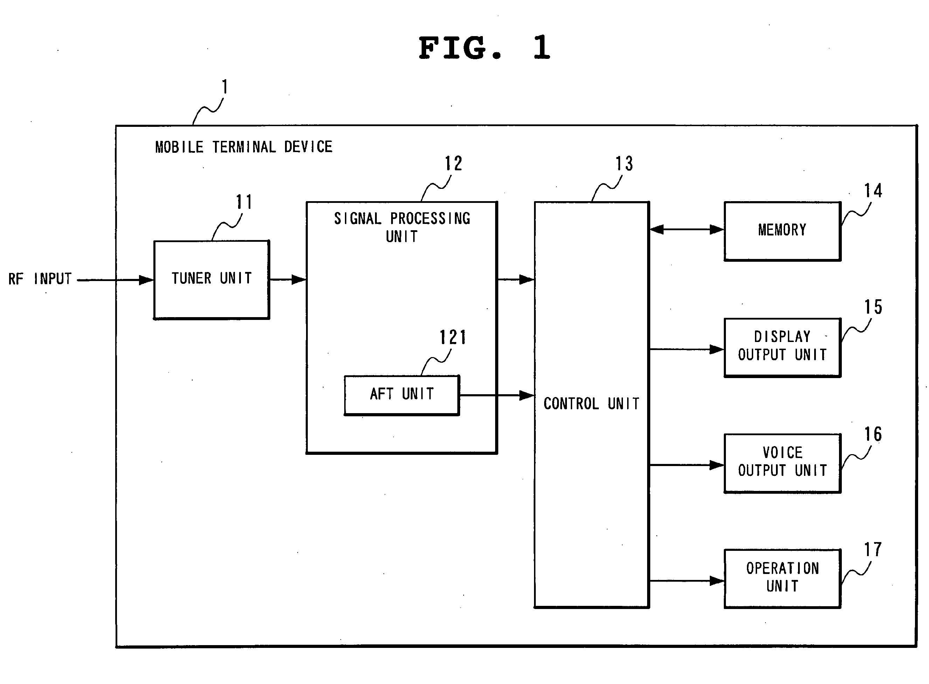

Next, embodiments of the present invention will be described with reference to the drawings. Fig. 1 is a block diagram showing an internal structure of a mobile terminal device according to an embodiment of the present invention. In Fig. 1, a mobile terminal device 1 includes a tuner unit 11, a signal processing unit 12, a control unit (controller) 13, a memory 14, a display output unit 15, a voice output unit 16 and an operation unit 17.

The tuner unit 11 frequency-converts an RF (Radio Frequency) signal and the signal processing unit 12 outputs a video signal and a voice signal from the frequency-converted RF signal. Provided in the signal processing unit 12 is an AFT (Automatic Fine Tuning) unit 121 which converts a frequency deviation caused by a reception condition during TV channel selection into a voltage.

The control unit 13 monitors an AFT voltage from the AFT unit 121 to conduct control according to reception conditions. The memory 14 stores operation modes for a threshold value for determining whether reception of an AFT signal is good and for each threshold value set by user operation, as well as storing a program (program executable by a computer) executed by the control unit 13. The display output unit 15 notifies display of a video signal and a reception condition, the voice output unit 16 outputs a voice signal and the operation unit 17 is an input apparatus for a user to operate.

The control unit 13 reads, from the memory 14, a threshold value for determining on the AFT voltage output from the AFT unit 121 according to reception conditions, compares the AFT voltage and the threshold value to determine whether reception is good or not and as a result of the determination, controls the display output unit 15 and the voice output unit 16 according to an operation mode set by a user.

The RF signal is frequency-converted by the tuner unit 11 and applied to the signal processing unit 12. The signal processing unit 12 outputs a video signal and a voice signal to the control unit 13, and the control unit 13 outputs these video signal and voice signal to the display output unit 15 and the voice output unit 16, respectively.

### (Embodiment 1)

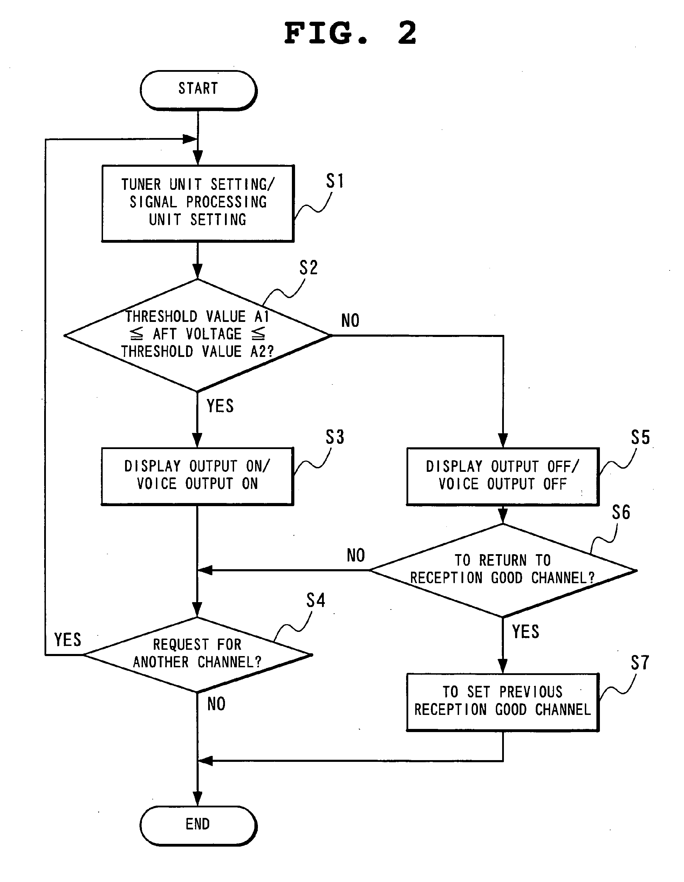

Fig. 2 is a flow chart showing display/voice control processing in a mobile terminal device according to a first embodiment of the present invention. Since the mobile terminal device according to the first embodiment of the present invention has the same internal structure as that of the above-described mobile terminal device 1 shown in Fig. 1, display/voice control processing according to the first embodiment of the present invention will be described with reference to Figs. 1 and 2. Shown in Fig. 2 is control executed when determining whether a reception condition is good or not good at the time of TV channel selection. Processing illustrated in Fig. 2 is realized by the execution of a program stored in the memory 14 by the control unit 13.

First in the mobile terminal device 1, setting of the tuner unit 11 and the signal processing unit 12 is conducted (Step S1 in Fig. 2) and the control unit 13 compares the AFT voltage from the AFT unit 121 and a threshold value A stored in the memory 14 to determine whether good reception exists or not from the comparison result (Step S2 in Fig. 2).

When the AFT voltage is not less than a threshold value A1 and not more than a threshold value A2, the control unit 13 determines that the reception is good and controls the display output unit 15 and the voice output unit 16 to turn on output of the video signal and the voice signal (Step S3 in Fig. 2). Thereafter, when a request for another channel is made (Step S4 in Fig. 2), the control unit 13 returns to Step S1 to again execute each of the above-described processing.

When the AFT voltage is less than the threshold value A1 or more than the threshold value A2, the control unit 13 determines that the reception is not good and controls the display output unit 15 and the voice output unit 16 to turn off output of the video signal and the voice signal (Step S5 in Fig. 2). Thereafter, when a request is made for returning to the setting of the previous reception good channel (Step S6 in Fig. 2), the control unit 13 conducts setting of the previous reception good channel (Step S7 in Fig. 2). In the display output unit 15, information about reception conditions may be displayed.

When no request is made for returning to the setting of the previous reception good channel (Step S6 in Fig. 2) and a request for another channel is made (Step S4 in Fig. 2), return to Step S1 to again execute each of the above-described processing.

According to the present embodiment, through the foregoing processing, if a reception condition is found to be good as a result of monitoring of the AFT voltage, a voice signal is ordinarily output to the voice output unit 16 and if not, no voice signal is output to the voice output unit 16, thereby enabling reduction in current consumption.

It is also possible in the present embodiment to display icons or the like on the display output unit 15 to recognize reception conditions at a glance, thereby always notifying reception conditions of a reception channel. Furthermore, in the present embodiment, not the AFT voltage but a reception level signal or both can be used for determining whether reception is good or not.

### (Embodiment 2)

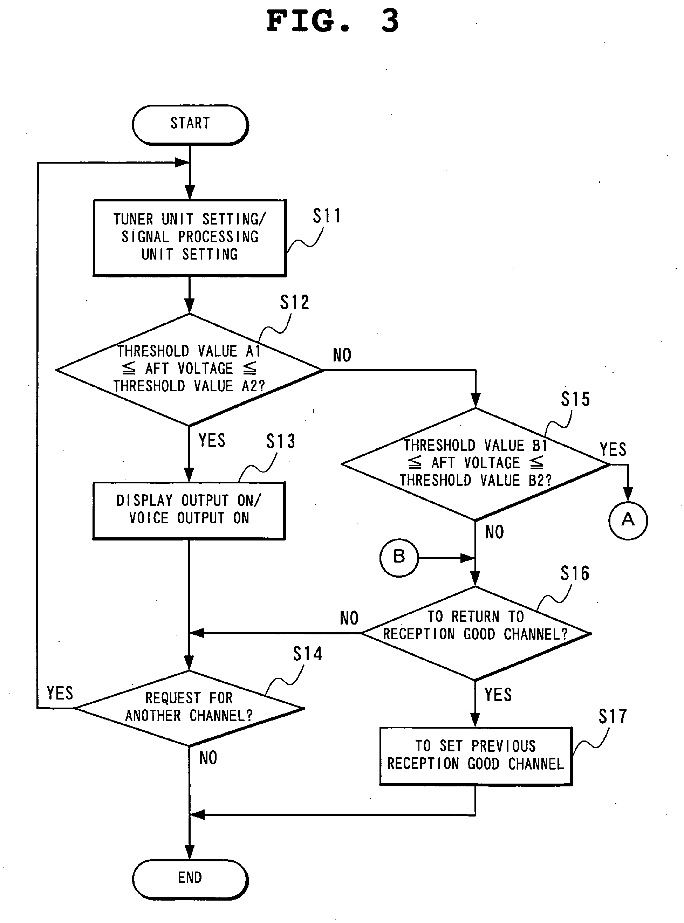

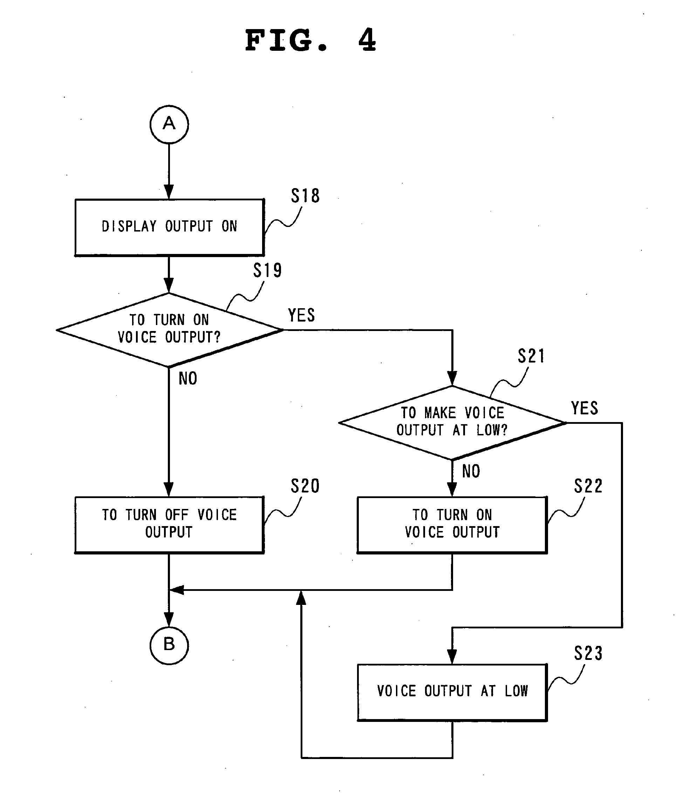

Figs. 3 and 4 are flow charts showing display/voice control processing in a mobile terminal device according to a second embodiment of the present invention. Since the mobile terminal device according to the second embodiment of the present invention has also the same internal structure as that of the above-described mobile terminal device 1 shown in Fig. 1, display/voice control processing according to the second embodiment of the present invention will be described with reference to Figs. 1, 3 and 4. In the present embodiment, as threshold values for use in determining on reception conditions at the time of TV channel selection, three patterns are provided, reception good, reception possible and reception impossible. Processing shown in Figs. 3 and 4 is realized by the execution of the program stored in the memory 14 by the control unit 13.

First in the mobile terminal device 1, setting of the tuner unit 11 and the signal processing unit 12 is conducted (Step S11 in Fig. 3) and the control unit 13 compares the AFT voltage from the AFT unit 121 and the threshold value A stored in the memory 14 to determine whether good reception exists or not from the comparison result (Step S12 in Fig. 3).

When the AFT voltage is not less than the threshold value A1 and not more than the threshold value A2, the control unit 13 determines that the reception is good to turn on output of the video signal and the voice signal from the display output unit 15 and the voice output unit 16 (Step S13 in Fig. 3). Thereafter, when a request for another channel is made (Step S14 in Fig. 3), the control unit 13 returns to Step S11 to again execute each of the above-described processing.

When the AFT voltage is less than the threshold value A1 or more than the threshold value A2, the control unit 13 determines that the reception is not good to compare, by using a threshold value B having a threshold value range larger than that of the threshold value A, the AFT voltage and the threshold value B and determine whether good reception exists or not (Step S15 in Fig. 3).

As a result of the determination, when the AFT voltage is not less than a threshold value B1 and not more than a threshold value B2, the control unit 13 controls the display output unit 15 to turn on the output of the video signal (Step S18 in Fig. 4). When the AFT voltage is less than the threshold value B1 or larger than the threshold value B2, if a request is made for returning to the setting of the previous reception good channel (Step S16 in Fig. 3), the control unit 13 sets the previous reception good channel (Step S17 in Fig. 3).

If no request is made for returning to the setting of the previous reception good channel (Step S16 in Fig. 3) and a request for another channel is made (Step S14 in Fig. 3), the control unit 13 returns to Step S11 to again execute each of the above-described processing.

On the other hand, after turning on the output of the video signal, when the user setting stored in the memory 14 is not turning on the output of the voice signal from the voice output unit 16 (Step S19 in Fig. 4), the control unit 13 turns off the output of the voice signal from the voice output unit 16 (Step S20 in Fig. 4).

When the user setting stored in the memory 14 is to turn on the output of the voice signal from the voice output unit 16 (Step S19 in Fig. 4) and to output the voice signal from the voice output unit 16 at a low level (Step S21 in Fig. 4), the control unit 13 outputs the voice signal from the voice output unit 16 at a low level (Step S23 in Fig. 4). When the setting is not outputting the voice signal from the voice output unit 16 at a low level (Step S21 in Fig. 4), the control unit 13 turns on the output of the voice signal from the voice output unit 16 (Step S22 in Fig 4).

The foregoing processing enables the present embodiment to set the voice output unit 16 according to external user setting, thereby enabling reduction in current consumption depending on user setting. It is also possible in the present embodiment to display icons or the like on the display output unit 15 to recognize reception conditions at a glance, thereby always notifying reception conditions of a reception channel. Furthermore, in the present embodiment, not the AFT voltage but a reception level signal or both can be used for determining whether reception is good or not.

### (Embodiment 3)

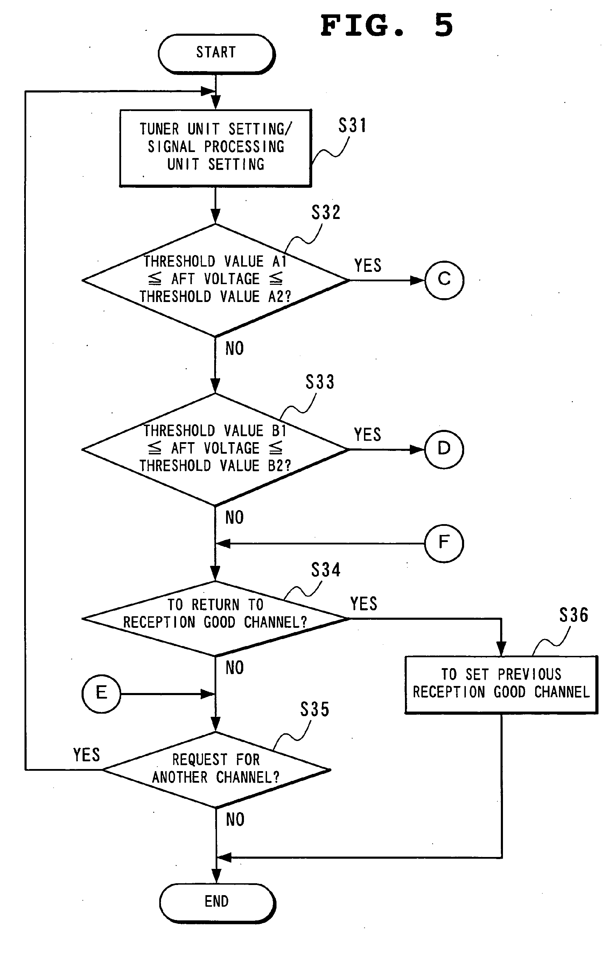

Figs. 5 to 7 are flow charts showing display/voice control processing in a mobile terminal device according to a third embodiment of the present invention. Since the mobile terminal device according to the third embodiment of the present invention also has the same internal structure as that of the above-described mobile terminal device 1 shown in Fig. 1, display/voice control processing according to the third embodiment of the present invention will be described with reference to Figs. 1 and 5 to 7. In the present embodiment, user setting is also possible at the display output unit 15. Processing shown in Figs. 5 to 7 is realized by the execution of the program stored in the memory 14 by the control unit 13.

First in the mobile terminal device 1, setting of the tuner unit 11 and the signal processing unit 12 is conducted (Step S31 in Fig. 5) and the control unit 13 compares the AFT voltage from the AFT unit 121 and the threshold value A stored in the memory 14 to determine whether good reception exists or not from the comparison result (Step S32 in Fig. 5).

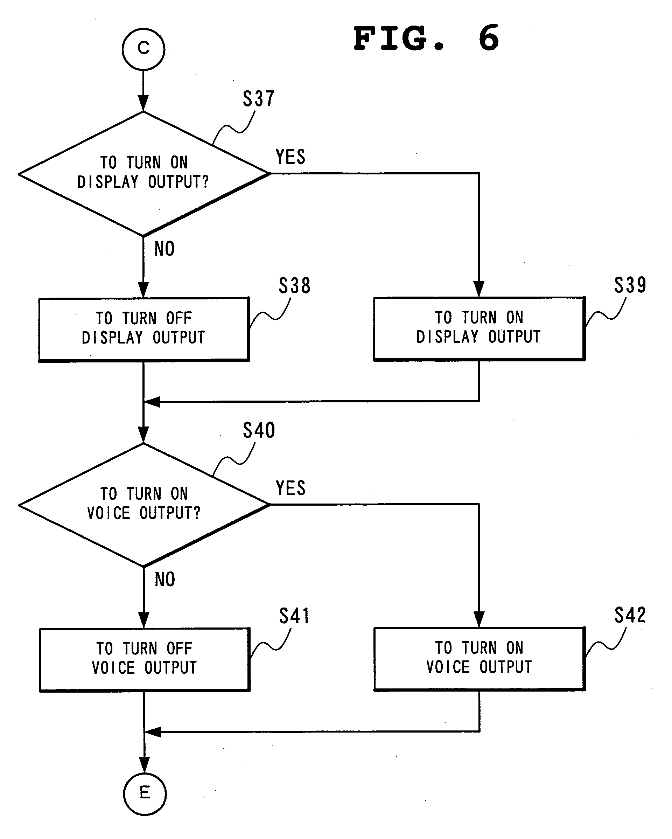

When the AFT voltage is not less than the threshold value A1 and not more than the threshold value A2 and user setting stored in the memory 14 is to turn on the output of the video signal from the display output unit 15 (Step S37 in Fig. 6), the control unit 13 turns on the output of the video signal from the display output unit 15 (Step S38 in Fig. 6). When the user setting stored in the memory 14 is not turning on the output of the video signal from the display output unit 15 (Step S37 in Fig. 6), the unit 13 turns off the output of the video signal from the display output unit 15 (Step S39 in Fig. 6).

Thereafter, when the user setting stored in the memory 14 is to turn on the output of the voice signal from the voice output unit 16 (Step S40 in Fig. 6), the control unit 13 turns on the output of the voice signal from the voice output unit 16 (Step S42 in Fig. 6). When the user setting stored in the memory 14 is not turning on the output of the voice signal from the voice output unit 16 (Step S40 in Fig. 6), the control unit 13 turns off the output of the voice signal from the voice output unit 16 (Step S41 in Fig. 6).

On the other hand, when the AFT voltage is less than the threshold value A1 or more than the threshold value A2, the control unit 13 determines that reception is not good to compare, by using the threshold value B having a threshold value range larger than that of the threshold value A, the AFT voltage and the threshold value B and determine whether good reception exists or not (Step S33 in Fig. 5).

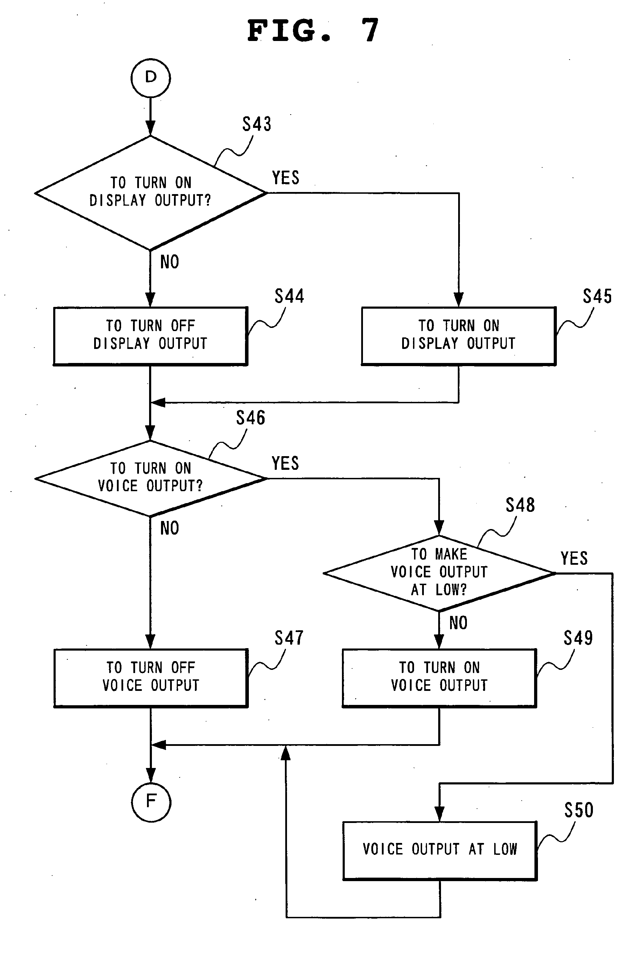

As a result of the determination, when the AFT voltage is not less than the threshold value B1 and not more than the threshold value B2 and user setting stored in the memory 14 is to turn on the output of the video signal from the display output unit 15 (Step S43 in Fig. 7), the control unit 13 turns on the output of the video signal from the display output unit 15 (Step S45 in Fig. 7). When the user setting stored in the memory 14 is not turning on the output of the video signal from the display output unit 15 (Step S43 in Fig. 7), the control unit 13 turns off the output of the video signal from the display output unit 15 (Step S44 in Fig. 7).

Thereafter, when the user setting stored in the memory 14 is not turning on the output of the voice signal from the voice output unit 16 (Step S46 in Fig. 7), the control unit 13 turns off the output of the voice signal from the voice output unit 16 (Step S47 in Fig. 7).

When the user setting stored in the memory 14 is to turn on the output of the voice signal from the voice output unit 16 (Step S46 in Fig. 7) and to output the voice signal from the voice output unit 16 at a low level (Step S48 in Fig. 7), the control unit 13 outputs the voice signal from the voice output unit 16 at a low level (Step S50 in Fig. 7). When the setting is not making output of the voice output unit 16 at a low level (Step S48 in Fig. 7), the control unit 13 turns on the output of the voice output unit 16 (Ste S49 in Fig. 7).

Moreover, when the AFT voltage is less than the threshold value B1 or larger than the threshold value B2, if a request is made for returning to the setting of the previous reception good channel (Step S34 in Fig. 5), the control unit 13 sets the previous reception good channel (Step S36 in Fig. 5). Thereafter, when a request for another channel is made (Step S35 in Fig. 5), the control unit 13 returns to Step S31 to again execute each of the above-described processing.

Furthermore, if no request is made for returning to the setting of the previous reception good channel (Step S34 in Fig. 5) and a request for another channel (Step S35 in Fig. 5), the control unit 13 returns to Step S31 to again execute each of the above-described processing.

The foregoing processing enables the present embodiment to control display output/voice output according to external user setting every time a reception condition is determined, so that further reduction in current consumption is possible. It is also possible in the present embodiment to display icons or the like on the display output unit 15 to recognize reception conditions at a glance even when output of the display signal is turned off, thereby always notifying reception conditions of a reception channel. Furthermore, in the present embodiment, not the AFT voltage but a reception level signal or both can be used for determining whether reception is good or not.

Thus, according to the present invention, when as a result of comparison between an AFT voltage monitored at the time of TV channel selection and a threshold value to determine whether good reception exists or not, if the reception is good, a video signal and a voice signal will be ordinarily output to the display output unit 15 and the voice output unit 16, respectively, and if not, no video signal and no voice signal will be output to the display output unit 15 and the voice output unit 16, thereby reducing current consumption.

Furthermore, the present invention enables reduction of current consumption by monitoring an AFT voltage at the time of TV channel selection and after comparing the AFT voltage and a threshold value to determine whether good reception exists or not, controlling the voice output unit 16 according to the determined reception condition.

Moreover, according to the present invention, based on a result of comparison between an AFT voltage monitored at the time of TV channel selection and a threshold value to determine whether reception is good or not, conducting control of the display output unit 15/the voice output unit 16 according to the reception condition enables further reduction in current consumption.

With the foregoing described structure and operation, the present invention enables reduction in current consumption to increase a continuous working time of a mobile terminal device.

As long as a radio or TV tuner is contained, the present invention is also applicable to such a mobile terminal device as a PDA (Personal Digital Assistant) other than such apparatuses as a headphone stereo apparatus and a mobile phone terminal.

Although the invention has been illustrated and described with respect to exemplary embodiment thereof, it should be understood by those skilled in the art that the foregoing and various other changes, omissions and additions may be made therein and thereto, without departing from the spirit and scope of the present invention.

## Claims

1. A mobile terminal device (1) mounted at least with a television tuner to display a video signal through a display output unit (15) and output a voice signal through a voice output unit (16), comprising:
a determination unit which determines on reception conditions at the time of selecting a television channel, and
a controller (13) which controls at least one of said display output unit (15) and said voice output unit (16) according to a result of the determination by said determination unit.

2. The mobile terminal device (1) as set forth in claim 1, wherein
said controller (13), when determination that reception is good is made by said determination unit, outputs said video signal and said voice signal through said display output unit (15) and said voice output unit (16) and when the determination that reception is good is not made by said determination unit, suppresses output of said video signal and said voice signal from said display output unit (15) and said voice output unit (16).

3. The mobile terminal device (1) as set forth in claim 1 or 2, wherein
said determination unit determines on said reception conditions by monitoring at least one of an AFT (Automatic Fine Tuning) voltage obtained by converting a frequency deviation which is caused by a reception condition at the time of said television channel selection and a reception level signal.

4. The mobile terminal device (1) as set forth in claim 1, 2 or 3, wherein
said controller (13), when determination that reception is good is made by said determination unit, makes said display output unit (15) and said voice output unit (16) output said video signal and said voice signal and when the determination that reception is good is not made by said determination unit, suppresses output of said video signal and said voice signal from said display output unit (15) and said voice output unit (16), and
said determination unit determines on said reception conditions by monitoring at least one of an AFT (Automatic Fine Tuning) voltage obtained by converting a frequency deviation which is caused by a reception condition at the time of said television channel selection and a reception level signal.

5. The mobile terminal device (1) as set forth in claim 1, 2, 3 or 4, wherein
said controller (13) controls said voice output unit (16) according to a result of said determination on a reception condition by said determination unit and external user setting.

6. The mobile terminal device (1) as set forth in claim 1, 2, 3, 4 or 5, wherein
said controller (13) controls said voice output unit (16) according to a result of said determination on a reception condition by said determination unit and external user setting, and
when determination is made by said determination unit that reception is good, makes said display output unit (15) and said voice output unit (16) output said video signal and said voice signal and when the determination is not made by said determination unit that reception is good, suppresses output of said video signal and said voice signal from said display output unit (15) and said voice output unit (16).

7. The mobile terminal device (1) as set forth in any one of claims 1 to 6, wherein
said controller (13) controls said voice output unit (16) according to a result of said determination on a reception condition by said determination unit and external user setting, and
when determination is made by said determination unit that reception is good, makes said display output unit (15) and said voice output unit (16) output said video signal and said voice signal and when the determination is not made by said determination unit that reception is good, suppresses output of said video signal and said voice signal from said display output unit (15) and said voice output unit (16), and
said determination unit determines on said reception conditions by monitoring at least one of an AFT (Automatic Fine Tuning) voltage obtained by converting a frequency deviation which is caused by a reception condition at the time of said television channel selection and a reception level signal.

8. The mobile terminal device (1) as set forth in any one of claims 1 to 7, wherein
said controller (13) controls said display output unit (15) and said voice output unit (16) according to a result of said determination on a reception condition by said determination unit and external user setting.

9. The mobile terminal device (1) as set forth in any one of claims 1 to 8, wherein
said controller (13) controls said display output unit (15) and said voice output unit (16) according to a result of said determination on a reception condition by said determination unit and external user setting, and
when determination is made by said determination unit that reception is good, makes said display output unit (15) and said voice output unit (16) output said video signal and said voice signal and when the determination is not made by said determination unit that reception is good, suppresses output of said video signal and said voice signal from said display output unit (15) and said voice output unit (16).

10. The mobile terminal device (1) as set forth in any one of claims to 9, wherein
said controller (13) controls said display output unit (15) and said voice output unit (16) according to a result of said determination on a reception condition by said determination unit and external user setting, and
when determination is made by said determination unit that reception is good, makes said display output unit (15) and said voice output unit (16) output said video signal and said voice signal and when the determination is not made by said determination unit that reception is good, suppresses output of said video signal and said voice signal from said display output unit (15) and said voice output unit (16), and
said determination unit determines on said reception conditions by monitoring at least one of an AFT (Automatic Fine Tuning) voltage obtained by converting a frequency deviation which is caused by a reception condition at the time of said television channel selection and a reception level signal.

11. A display/voice control method of a mobile terminal device (1) mounted at least with a television tuner to display a video signal through a display output unit (15) and output a voice signal through a voice output unit (16), comprising the steps of:
on said mobile terminal device (1) side, determining on reception conditions at the time of television channel selection, and
controlling at least one of said display output unit (15) and said voice output unit (16) according to a result of the determination.

12. The display/voice control method of a mobile terminal device (1) as set forth in claim 11, wherein
at the step of controlling at least one of said display output unit (15) and said voice output unit (16), when said determination results in finding that reception is good, said video signal and said voice signal are output through said display output unit (15) and said voice output unit (16) and when said determination results in finding that reception is not good, output of said video signal and said voice signal from said display output unit (15) and said voice output unit (16) is suppressed.

13. The display/voice control method of a mobile terminal device (1) as set forth in claim 11 or 12, wherein
at the step of determining on said reception conditions, at least one of an AFT (Automatic Fine Tuning) voltage obtained by converting a frequency deviation which is caused by a reception condition at the time of said television channel selection and a reception level signal is monitored to determine on said reception conditions.

14. The display/voice control method of a mobile terminal device (1) as set forth in claim 11, 12 or 13, wherein
at the step of controlling at least one of said display output unit (15) and said voice output unit (16), when said determination results in finding that reception is good, said video signal and said voice signal are output through said display output unit (15) and said voice output unit (16) and when said determination results in finding that reception is not good, output of said video signal and said voice signal from said display output unit (15) and said voice output unit (16) is suppressed, and
at the step of determining on said reception conditions, at least one of an AFT (Automatic Fine Tuning) voltage obtained by converting a frequency deviation which is caused by a reception condition at the time of said television channel selection and a reception level signal is monitored to determine on said reception conditions.

15. The method as set forth in claim 11, 12, 13 or 14, wherein
at the step of controlling at least one of said display output unit (15) and said voice output unit (16), said voice output unit (16) is controlled according to said determination result and external user setting.

16. The method as set forth in any one of claims 11 to 15, wherein
at the step of controlling at least one of said display output unit (15) and said voice output unit (16), said voice output unit (16) is controlled according to said determination result and external user setting, and when said determination results in finding that reception is good, said video signal and said voice signal are output through said display output unit (15) and said voice output unit (16) and when said determination results in finding that reception is not good, output of said video signal and said voice signal from said display output unit (15) and said voice output unit (16) is suppressed.

17. The method as set forth in any one of claims 11 to 16, wherein
at the step of controlling at least one of said display output unit (15) and said voice output unit (16), said voice output unit (16) is controlled according to said determination result and external user setting, and when said determination results in finding that reception is good, said video signal and said voice signal are output through said display output unit (15) and said voice output unit (16) and when said determination results in finding that reception is not good, output of said video signal and said voice signal from said display output unit (15) and said voice output unit (16) is suppressed, and
at the step of determining on said reception conditions, at least one of an AFT (Automatic Fine Tuning) voltage obtained by converting a frequency deviation which is caused by a reception condition at the time of said television channel selection and a reception level signal is monitored to determine on said reception conditions.

18. The method as set forth in any one of claims 11 to 17, wherein
at the step of controlling at least one of said display output unit (15) and said voice output unit (16), said display output unit (15) and said voice output unit (16) are controlled according to said determination result and external user setting.

19. The method as set forth in any one of claims 11 to 18, wherein
at the step of controlling at least one of said display output unit (15) and said voice output unit (16), said display output unit (15) and said voice output unit (16) are controlled according to said determination result and external user setting, and when said determination results in finding that reception is good, said video signal and said voice signal are output through said display output unit (15) and said voice output unit (16) and when said determination results in finding that reception is not good, output of said video signal and said voice signal from said display output unit (15) and said voice output unit (16) is suppressed.

20. The method as set forth in any one of claims 11 to 19, wherein
at the step of controlling at least one of said display output unit (15) and said voice output unit (16), said display output unit (15) and said voice output unit (16) are controlled according to said determination result and external user setting, and when said determination results in finding that reception is good, said video signal and said voice signal are output through said display output unit (15) and said voice output unit (16) and when said determination results in finding that reception is not good, output of said video signal and said voice signal from said display output unit (15) and said voice output unit (16) is suppressed, and
at the step of determining on said reception conditions, at least one of an AFT (Automatic Fine Tuning) voltage obtained by converting a frequency deviation which is caused by a reception condition at the time of said television channel selection and a reception level signal is monitored to determine on said reception conditions.

21. A program of a display/voice control method executed on a computer as a mobile terminal device (1) mounted at least with a television tuner to display a video signal through a display output unit (15) and output a voice signal through a voice output unit (16), comprising the functions of:
determining on reception conditions at the time of television channel selection, and
controlling at least one of said display output unit (15) and said voice output unit (16) according to a result of the determination.

22. The program of a display/voice control method of a mobile terminal device (1) as set forth in claim 21, wherein
in the function of controlling at least one of said display output unit (15) and said voice output unit (16), said voice output unit (16) is controlled according to said determination result and external user setting.

23. The program of a display/voice control method of a mobile terminal device (1) as set forth in claim 21 or 22, wherein
in the function of controlling at least one of said display output unit (15) and said voice output unit (16), said voice output unit (16) is controlled according to said determination result and external user setting, and when said determination results in finding that reception is good, said video signal and said voice signal are output through said display output unit (15) and said voice output unit (16) and when said determination results in finding that reception is not good, output of said video signal and said voice signal from said display output unit (15) and said voice output unit (16) is suppressed.
